# EUROPEAN PATENT APPLICATION

(11) **EP 2 781 493 A2**
(43) Date of publication of application: **24.09.2014**
(21) Application number: 14382095.9
(22) Date of filing: 18.03.2014
(51) Int. Cl.: C04B 26/26

(54) **Bituminous composition and use thereof for reducing vibrations and noise**

(30) Priority: 18.03.2013 ES 201330389
(71) Applicant: Aglomerados Los Serranos, S.A., 03203 Elche (Alicante) (ES)
(72) Inventor: Berenguer Prieto, Jose Manuel, 03680 Aspe (Alicante) (ES); Griñan Ramis, Eduardo Jose, 03003 Alicante (ES); Nohales Herraiz, Cesar, 46701 Gandia (Valencia) (ES); Verdu Aracil, Francisco Javier, 03001 Alicante (ES)
(74) Representative: Durán-Corretjer, S.L.P.

(57) **Abstract**

The present invention relates to the field of civil engineering and relates to a novel composition of a bituminous material used in the construction of any layer forming part of a railway or highway structure. Said composition, in addition to having structural properties suitable for use on railways or highways has improved properties in terms as regard the reduction of vibration and noise.

## Description

This invention relates to the field of civil engineering and relates to a new composition of a bituminous material used in the construction of any layer forming part of a railway or highway structure. In addition to having structural properties suitable for use on railways or highways this composition has improved properties as regards the reduction of vibration and noise.

The sub-ballast is the layer located beneath the ballast and on top of the platform of a railway track and it has the fundamental function of preventing damage to the platform through erosion, draining off rainwater, improving the distribution of loads and keeping the ballast out of reach of extraneous materials. The granularsub-ballast conventionally used has many problems relating to behaviour and supply, which means that there is a need to develop new materials to replace it.

Among other disadvantages, conventional granular sub-ballast has a low rigidity modulus, as a result of which large thicknesses are used to ensure an adequate loadbearing capacity, and it may be subject to settling; it may also give rise to local problems with its waterproofing function and separation between the ballast layer and the platform, sometimes giving rise to contamination between the two layers; in addition to this the large quantity of materials required and the restrictive particle size requirements mean that there may be a shortfall in supply, few authorised quarries and major environmental impacts, both visual and during transport.

In order to overcome the abovementioned problems with conventional granular sub-ballast, bituminous blends fundamentally comprising a combination of aggregates and a hydrocarbon binder have been provided. For example, Patent Document PCT/ES2011/070351 discloses a bituminous material and its use in the construction of civil engineering and railway structures. Among other components, this bituminous material comprises vulcanised rubber powder originating from used or damaged tyres and those rejected for use. Said document does not mention the possible use of this material as a vibration and noise attenuator, and in any event its use is not included within the scope of protection of this invention.

In general the components forming a bituminous composition of this type are coarse aggregates, mineral dust and a bituminous binder. However, depending upon the type and proportion of the materials used in the bituminous compositions, such as, for example, polymers of a great variety of types, very different properties may be obtained in the final bituminous composition.

On the other hand, the replacement of roadway materials obtained from quarries, such as conventional granular sub-ballast and ballast stone, by artificial materials is nowadays a normal trend. When considering railway works it is very advantageous not to depend on the availability of natural materials of this type originating from quarries, which are less abundant and available every day, and this is also better from the environmental point of view. Furthermore, as a result of this replacement, transport costs are considerably reduced when a mobile asphalt production unit installed close to the track can be considered.

In addition to the above considerations, it is known that the characteristics of bituminous blends make them an advantageous product for use on railways. Their suitable deformability in the face of the differential settling arising from granular materials below and their high level of impermeability provide them properties offering a compromise solution in comparison with the use of concrete and granular materials.

Finally, the problem of wastes is very prominent among the various environmental concerns which need to be solved at the present time. In this respect it is more necessary to use these wastes every day. Specifically, the abundant use of polymer products, such as rubbers and plastics in different sectors, has resulted in the appearance of various environmental problems, essentially related to the wastes which they generate. A very worrying example of this is plastic wastes originating from, among other things, the construction of greenhouses, the linings of reservoirs, pipes or vessels from the food industry or rubber wastes originating from the footwear industry.

Thus, this invention provides a new composition of a bituminous material which is suitable for use as sub-ballast on railways or in any layer forming part of a highway. Surprisingly, the inventors have discovered that this bituminous material composition has properties which provide a significant reduction in vibration and noise, in addition to appropriate structural properties for use as sub-ballast.

The bituminous material according to this invention has structural strength, rigidity, loadbearing capacity, resistance to permanent plastic deformation after a specific number of cycles, fatigue resistance, durability, adhesiveness and impermeability. In addition to this it can act on the propagation of vibration, mitigating its effect through the rheological properties provided by polymer particles and the nature of the asphalt as a viscoelastic material.

The composition according to this invention offers three fundamental advantages at the same time:
- It makes use of the characteristics provided by polymer products to the bituminous blends, to achieve suitable rheological properties, with a view to attenuating vibration and noise.
- The use of natural materials originating from quarries, which become less available every day, is avoided. Such materials may for example be ballast stone and granular material forming the sub-ballast layer.
- Waste plastics materials can be used as polymer additives to form part of the bituminous material, with the aim of achieving better rheological properties at the same time as providing an environmentally friendly construction material.

Furthermore, the option of reusing plastic wastes as a polymer additive for this invention is very appropriate. This is due to the fact that the cost of polymer materials used as a raw material is high in comparison with that of bitumen and therefore this problem can be partly resolved through using waste polymers such as those mentioned above.

The bituminous composition according to this invention comprises:
- Aggregates: 90-98% by weight of the total composition.
- Binder: 2-15% by weight of the total composition.
- Polymer material: 5% or less by weight of the total composition or 40% or less by weight with respect to the weight of the binder.
characterised in that:
said binder is selected from asphalt bitumens having a penetration of 10/20, 20/35, 35/50, 50/70, 70/100 or greater up to 300 tenths of a millimetre, or any other which is included within the range of the above; and in that the polymer material is selected from thermoplastic or unidimensional polymers, thermohardenable or three-dimensional polymers, elastomers or rubbers and thermoplastic elastomers; with the condition that the polymer material does not originate from the recycling of used tyres.

Suitable thermoplastic or one-dimensional polymers for use in the bituminous composition according to this invention are polyethylene (PE), polypropylene (PP)and ethylenevinylacetate (EVA), among others.

Suitable thermohardenable or three-dimensional polymers for use in the bituminous composition according to this invention can be selected from epoxy resin, polyurethane or polyester resin, among others.

Furthermore, suitable elastomers or rubbers for use in the bituminous composition according to this invention include natural rubber (NR), ethylenepropylene rubbers (EPM), terpolymers of ethylenepropylenediene (EPDM)and butadiene styrene rubber (SBR), among others.

Suitable thermoplastic elastomers for use in the bituminous composition according to this invention may be selected from the group comprising linear or radial synthetic copolymers of styrene butadiene styrene (SBS) and styrene-isoprene-styrene copolymers (SIS), among others.

The polymer material used in the bituminous composition according to this invention may be reused polymer material originating from wastes.

The type of asphalt bitumen used as a binder in the composition according to this invention is selected according to the desired degree of noise and vibration mitigation. For example in the case of a railway track or a highway running through a town, where there may furthermore be a nearby hospital, it is recommended that high consistency and viscosity bitumens should be used such as asphalt bitumens having a penetration of 10/20, 20/35 or 35/50. On the contrary, when the requirements for vibration and noise reduction are not too restricting, such as for example along an ordinary stretch of railway line or highway in an urban environment, a bitumenhaving greater penetration and therefore less consistency and viscosity may be used, such as for example an asphalt bitumen having a penetration of 50/70 or 70/100. Furthermore, the climate, the location of the layer in the cross-section of the roadway and the category of railway traffic which the roadway has to accept during its useful life, must also be taken into account when selecting the type of bitumen.

The term aggregate, as used in this invention, refers to the granulate material which is mainly used as a raw material in construction. Aggregates which may be used in the bituminous composition according to this invention must comply with the various normal standards and practice (for example UNE-EN 933-2). The particle size of these aggregates can be regarded as being separated into two ranges: particles retained by a 2 mm screen (coarse fraction) and particles not retained by a 2 mm screen but retained by a 0.063 mm screen (fine fraction). The coarse fraction, the fine fraction or a blend of both fractions of aggregates may be used depending upon the desired degree of compaction in the layer of bituminous composition according to this invention.

Bituminous compositions prepared according to this invention will comply with the standards prepared by the European Standardisation Committee (CEN) for this field.

The European standards to which reference is made are the following:
- European standard EN 13108-1 for bituminous bitumens, together with its corresponding amendments.
- European standard EN 13108-2 for bituminous blends for thin layers, together with its corresponding amendments.
- European standard EN 13108-3 for type SA bituminous blends, together with its corresponding amendments.
- European standard EN 13108-4 for HRA type bituminous blends, together with its corresponding amendments.
- European standard EN 13108-5 for SMA type bituminous blends, together with its corresponding amendments.
- European standard EN 13108-6 for bituminous mastics, together with its corresponding amendments.
- European standard EN 13108-7 for draining bituminous blends, together with its corresponding amendments.
- European Standard EN 13108-8 for recycled bituminous blends, together with its corresponding amendments.

Furthermore they comply with all the official versions equivalent to the standards mentioned prepared by the various organisations issuing national standards. Obviously the official versions issued by AENOR for Spain have also been considered in this invention.

These UNE-EN standards are the following:
- UNE-EN 13108-1, together with its corresponding amendments.
- UNE-EN 13108-2, together with its corresponding amendments.
- UNE-EN 13108-3, together with its corresponding amendments.
- UNE-EN 13108-4, together with its corresponding amendments.
- UNE-EN 13108-5, together with its corresponding amendments.
- UNE-EN 13108-6, together with its corresponding amendments.
- UNE-EN 13108-7, together with its corresponding amendments.
- UNE-EN 13108-8, together with its corresponding amendments.

The bituminous composition according to this invention can be prepared using the normal equipment for the preparation of conventional bituminous blends, which is known to those skilled in the art. The equipment must be capable of heating both the aggregates and the binder, and metering and mixing the components in appropriate proportions.

As an exception to the normal preparation process it is possible to add the polymer material by two different processes known as the wet route and the dry route. The difference between the two processes lies in the time when the polymer material is added to the composition. In the wet route the polymer material is added to the binder (asphalt bitumen) in advance, for example, in a kneading machine. On the other hand in the dry route the particles of polymer material are added directly to the blend together with the aggregate.

The general process for preparing the bituminous composition according to this invention comprises the stages of: transporting the aggregates from the hoppers to the dryer, drying the aggregates, heating the aggregates to a predetermined temperature, adding the polymer material to the mixer or the kneading machine, as appropriate (dry route or wet route) in the appropriate established proportion, using a silo with a metering weigh scale, and mixing all the components at a temperature which may be between 60 and 200°C depending upon the type of blend.

The temperature of the mixed material must be higher than that of a conventional blend due to the presence of polymers in the composition (from 5 to 10°C higher). The properties of the bitumen will be improved as the result of interaction between the polymer material and the bitumen. The dosification of the bitumen has to be greater than in the case of a conventional blend because of the presence of the polymer material.

As mentioned previously, this invention also relates to use of the bituminous composition for the construction of civil engineering structures.

Furthermore the bituminous composition according to this invention may be used in the construction of any layer forming part of a railway or highway structure. For example in a railway it may also be used on the surface: acting as a support for the sleepers, as a matrix in which the sleepers are embedded or in which the rails are embedded; as a base, subbase, layer or sublayer of the roadway; as a layer of sub-ballast; or as any other layer below the sub-ballast layer whose purpose is to attenuate railway noise and vibration, or other requirements relating to the structural functionality.

In addition to this it is also possible that the bituminous composition according to this invention may be used in two simultaneous locations in the same section of roadway. Its noise and vibration attenuating power can be increased in this way. Its noise and vibration-absorbent capacity may also be made more prominent if this material is placed in contact with the surface, as unlike bitumen it has a rougher surface which is capable of reducing externalities in the form of noise through the absorption mechanism.

This invention therefore also relates to use of the bituminous composition to reduce noise and vibration in a railway or highway.

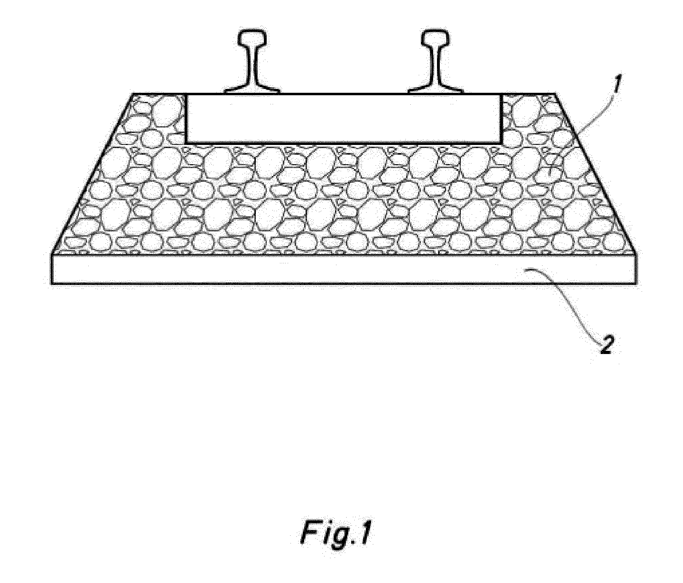

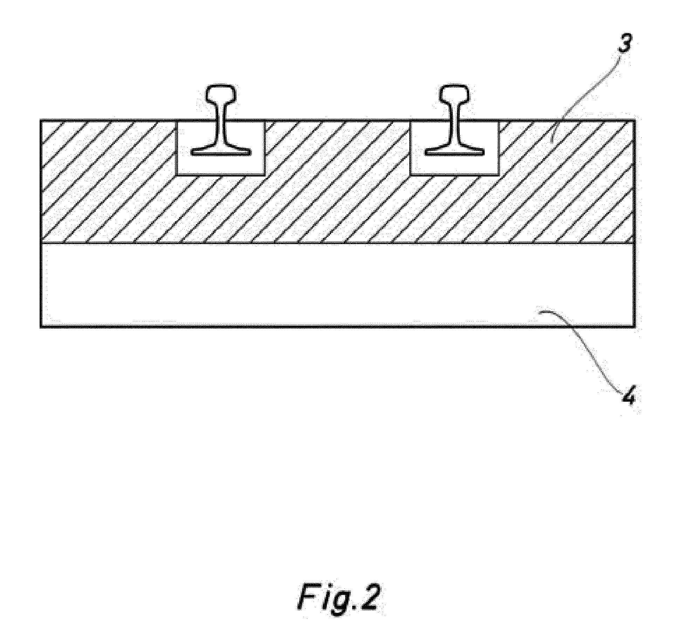

Figures 1 and 2 show some of the possible locations of the layer of the bituminous composition according to this invention. Figure 1 shows a transverse cross-section of a railway in which the bituminous composition according to this invention is used as a sub-ballast layer -2-, below ballast layer -1-.

Figure 2 shows a transverse cross-section of a type of slab roadway in which the bituminous composition according to this invention is used to reduce vibrations in a slab - 3- on a granular base -4-.

The bituminous composition according to this invention may be spread by any conventional laying method known to those skilled in the art. However such spreading may vary depending upon the layer of the roadway in which the bituminous composition is to be used or what range of noise and vibration frequencies it is desired to reduce. These two facts above all govern the thickness of the blend which has to be spread, and this in turn governs the number of spreading operations required.

This invention is described in greater detail below with reference to various embodiments. However these embodiments are not intended to restrict the scope of this invention, but to illustrate its description.

### EXAMPLES

### Example 1. Preparation of a bituminous composition according to this invention (Composition 1)

A bituminous composition according to this invention was prepared by first mixing aggregate (91.5% by weight), bitumen having a penetration of 20/35 (5.5% by weight) and butadienestyrene rubber (SBR, 3% by weight).

The particle size distribution of the aggregate in Composition 1 is shown in the following table.

| Particle size fraction (mm) | % by weight with respect to the total weight of the blend |
|---|---|
| 18-25 | 9.15 |
| 12-18 | 14.64 |
| 6-12 | 18.3 |
| 0-5 | 45.30 |
| remainder | 4.11 |

### Example 2. Preparation of a bituminous composition according to this invention (Composition 2)

A bituminous composition according to this invention was prepared by first mixing aggregate (92.3% by weight), bitumen having a penetration of 35/50 (5.3% by weight) and low density polyethylene originating from the waste plastic of greenhouses in the agricultural sector (LLDPE, 2.4% by weight).

The particle size ranges of the aggregate in Composition 2 is shown in the table below.

| Particle size fraction (mm) | % by weight with respect to the total weight of the blend |
|---|---|
| 18-25 | 11.07 |
| 12-18 | 12.92 |
| 6-12 | 17.54 |
| 0-5 | 46.62 |
| remainder | 4.15 |

### Example 3. Preparation of a bituminous composition according to this invention (Composition 3).

A bituminous composition according to this invention was prepared by first mixing aggregate (92.0% by weight), bitumen having a penetration of 50/70 (5.5% by weight) and polypropylene (PP, 2.5% by weight).

The particle size range of the aggregate in Composition 3 is shown in the following table.

| Particle size fraction (mm) | % by weight with respect to the total weight of the blend |
|---|---|
| 18-25 | 7.36 |
| 12-18 | 16.56 |
| 6-12 | 19.32 |
| 0-5 | 45.08 |
| remainder | 3.68 |

### Example 4. Noise/vibration reduction in comparison with a conventional granular material

The product was spread using two normal spreading machines fitted with heated vibrating plates. A levelling system was also necessary in order to ensure that the final surface was perfectly at the height established by the prior topography. The temperature of the blend during this operation was between 130 and 180°C.

The blend was compacted using conventional techniques and machinery, that is to say by roller or tyre compactors in sequence. As is the case for conventional blends these processes make it possible to obtain a suitable uniform final surface.

A layer of compositions 1 to 3 in the above examples, of thickness 9 cm, was spread over a conventional fill. In addition to this a 30 cm layer of conventional granular sub-ballast was spread over a conventional fill.

Each of the layers was excited using an impact deflectometer which always impressed the same impact load at an ambient temperature of 21°C. The acceleration of each of the compositions applied was recorded at points located 1 m and 3 m from the excitation point.

The reduction in the amplitude of the acceleration of the compositions according to this invention was very similar, approximately 32% less at the point at a distance of 1 m and approximately 41% less at the point at a distance of 3 m from the excitation point in comparison with conventional granular sub-ballast layer.

The same test was subsequently repeated at an ambient temperature of 5°C. Because the magnitude at the impact was not always the same, as it depends on the human factor, the acceleration amplitudes obtained were standardised by dividing these by the impact force recorded by the hammer.

The reduction in the adjusted acceleration amplitude for the compositions according to this invention was very similar, approximately 12% less at the point at a distance of 1 m and approximately 16% less at a point located 3 m from the excitation point in comparison with conventional granular sub-ballast layer.

Although the invention has been described in relation to preferred embodiments, these must not be regarded as restricting the invention which will be defined by the broadest interpretation of the following claims.

## Claims

1. A bituminous composition comprising:
- Aggregate: 90-98% by weight of the total composition
- Binder: 2-15% by weight of the total composition
- Polymer material: 5% or less by weight of the total composition or 40% or less by weight with respect to the weight of the binder
**characterised in that**:
the binder is selected from asphalt bitumens having a penetration of 10/20, 20/35, 35/50, 50/70, 70/100 or more up to 300 tenths of a millimetre, or any other included in the range of the above; and **in that** the polymer material is selected from polyethylene (PE), polypropylene (PP),
ethylenevinylacetate (EVA), epoxy resin, a polyurethane, a polyester resin, ethylenepropylene rubber (EPM),
ethylenepropylenediene terpolymer (EPDM); with the condition that the said polymer material does not originate from the recycling of waste tyres.

2. A bituminous composition according to claim 1, **characterised in that** the polymer material is a reused polymer material originating from wastes.

3. Use of the bituminous composition according to claims 1-2 for the construction of civil engineering structures.

4. Use of the bituminous composition according to claims 1-2 for the construction of any layer which forms part of a railway structure.

5. Use of the bituminous composition according to claims 1-2 to reduce noise and vibration in a railway.

6. Use of the bituminous composition according to claims 1-2 for the construction of any layer forming part of a highway.

7. Use of the bituminous composition according to claims 1-2 to reduce noise and vibration in a highway.
